# EUROPÄISCHE PATENTSCHRIFT

(11) **EP 2 305 428 B1**
(45) Veröffentlichungstag und Bekanntmachung des Hinweises auf die Patenterteilung: **31.08.2016**
(21) Anmeldenummer: 09171826.2
(22) Anmeldetag: 30.09.2009
(51) Int. Cl.: B25B 27/14, B25B 7/22, H01R 43/042, H02G 1/12

(54) **Zange**
Pliers
Pince

(43) Veröffentlichungstag der Anmeldung: 06.04.2011
(73) Patentinhaber: Wezag GmbH Werkzeugfabrik, 35260 Stadtallendorf (DE)
(72) Erfinder: Glockseisen, Thomas, 40217 Düsseldorf (DE); Battenfeld, Kurt, 35085 Ebsdorfergrund/Wittelsberg (DE)
(74) Vertreter: REHBERG HÜPPE + PARTNER

(56) Entgegenhaltungen:
- DE-U1- 9 208 845
- DE-U1- 20 100 031
- US-A- 5 063 770
- US-A- 5 894 617
- US-A1- 2006 254 057
- US-B1- 6 427 275

## Beschreibung

### TECHNISCHES GEBIET DER ERFINDUNG

Die Erfindung betrifft eine Zange, bei welcher ein über Handhebel manuell betätigbares Werkzeug zur Bearbeitung eines Werkstücks von einem Zangenkopf gebildet ist.

### STAND DER TECHNIK

DE 201 00 031 U1 offenbart eine als Crimp- oder Presszange ausgebildete Zange. Das mit dieser Zange zu bearbeitende Werkstück ist ein Kabelverbinder, der auf ein Kabelende aufgepresst werden soll. Das Werkzeug der Presszange, welches für den Verpressvorgang zuständig ist, ist mit zwei Pressprofileinsätzen gebildet, die an mit den Handhebeln verschwenkten Pressbacken der Zange in einem Zangenkopf gehaltenen sind. Die Pressprofileinsätze besitzen jeweils unterschiedliche Nesthälften, so dass mit einem Paar von Pressprofileinsätzen mehrere unterschiedliche Nester gebildet werden können, mit welchen unterschiedliche Querschnittsgeometrien des Kabelverbinders verpresst werden können. In dem Gebrauchsmuster wird es als bekannt vorausgesetzt, dass ein Zangenkörper mit unterschiedlichen Paaren von Pressprofileinsätzen gekoppelt werden kann und der Presszangenkörper sowie die unterschiedlichen Paare von Pressprofileinsätzen in einem Koffer von dem Monteur mitgeführt werden können. Das Gebrauchsmuster schlägt vor, nicht benutzte Pressprofileinsätze in Führungsschienen, welche in den einander zugewandten Innenseiten der Handhebel vorgesehen sind, zu bevorraten. Somit erübrigt sich der Einsatz eine Koffers - vielmehr ist eine Einheit gebildet mit dem Presszangenkörper, dem aktuell in dem Zangenkopf eingesetzten Paar von Pressprofileinsätzen und den am Griff bevorrateten, derzeit nicht verwendeten Paaren von Pressprofileinsätzen. Die Pressprofileinsätze sind von der Endseite der Handhebel in die Führungsschienen einschiebbar und über eine Rastverbindung, hier eine Rastkugel, in unterschiedlichen Axialpositionen der Führungsschienen rastierbar.

US 5,285,703 offenbart eine Zange, bei welcher Paare von Pressstempeln in (Press-)Backen einschraubbar sind. Nicht genutzte Paare von Pressstempeln mit unterschiedlichen Geometrien können von außen in entsprechende Gewindebohrungen der Handhebel eingeschraubt werden.

Die Anmelderin vertreibt unter der Kennzeichnung CE10, CE21, CE30 und CE31 Crimpzangen, bei welchen im Wesentlichen einstückige Zangenhälften über eine Kröpfung von den Backen zu den Handhebeln übergehen. Bei spiegelverkehrter Anordnung der beiden Zangenteile sind die beiden Zangenteile im Bereich ihrer Kröpfungen über einen Gelenkbolzen gegeneinander verschwenkbar gelagert. Die Zangen dieses Typs sind multifunktional ausgebildet:
- Im vorderen Endbereich der Backen bilden die Backen Schneiden aus, über welche ein Kabel durchtrennt werden kann.
- Zwischen den genannten Schneiden und dem gekröpften Bereich bilden die Backen Gesenkhälften aus, über die Crimphülsen oder Kontakte verpresst werden können.
- Schließlich bilden die Handhebel zwischen Griffbereichen und dem gekröpften Bereich jeweils Teilnester aus mit mehreren Schneidkanten mit ungefähr halbkreisförmiger Schneidkontur. In der Schließstellung der Zange ergänzen sich zugeordnete Teilnester zu einem Nest. Mit der Schließbewegung der Handhebel schneidet ein Paar von zugeordneten Schneidkanten eines derartigen Nests in einen Endbereich eines Kabels ein, welches quer zur Haupterstreckungsebene der Zange und quer zu der Ebene, in welcher die Handhebel verschwenkt werden, in das Nest eingebracht ist. Das Kabelende kann dann in dieser Schließstellung abisoliert werden, indem das abzuisolierende Kabelende von der Zange weg gezogen. Die Zange besitzt mehrere unterschiedliche Nester zum Abisolieren von Kabeln unterschiedlicher Durchmesser.

Unter der Kennzeichnung CG42, CG44, CG65 und CG66 vertreibt die Anmelderin Presszangen, bei welchen anstelle der Presszange mit im Wesentlichen einstückig gebildeten Zangenteilen eine Kniehebelübersetzung mit Totpunkteinrastung zum Einsatz kommt. Hier sind die Schneidkanten und Teilnester nicht integraler Bestandteil der Handhebel bzw. Kniehebel.

Vielmehr sind die die Schneidkanten und Teilnester ausbildenden beiden Bauelemente separat in Form von Blechen ausgebildet, die jeweils mit einem Handhebel bzw. Kniehebel vernietet sind.

US 2006/0254057 A1 offenbart ein multifunktionales Werkzeug, bei welchem über zwei verschwenkbare Handhebel handbetätigt zwei Pressbacken aufeinander zu bewegt werden können, um zwischen diesen ein Fitting zu verpressen. Das Werkzeug findet Einsatz für die Herstellung von Leitungsverbindungen für Beregnungsanlagen von Rasenflächen, bei welchen Rohre aus Kunststoff eingesetzt werden. Um mit dem Werkzeug neben dem Verpressen des Fittings auch ein Durchtrennen der Rohre aus Kunststoff zu ermöglichen, ist an einem ersten Handhebel verschwenkbar ein Hebel gehalten, dessen erster Hebelteil sich in den Zwischenraum zwischen den Handhebeln erstreckt, wo dieser einen Betätigungsmechanismus bildet, indem eine endseitige Rolle des Hebelteils entlang einer Betätigungsfläche des zweiten Handhebels abwälzt. Mit einer Verschwenkung der Handhebel geht somit eine Verschwenkung des Betätigungsmechanismus und des Hebels einher. Der nach außen aus dem Handhebel auskragende andere Hebelteil des Hebels bildet ein Schneidelement, welches von einer Ausgangsstellung für geöffnete Handhebel, in welcher das Schneidelement ungefähr quer zur Längserstreckung des ersten Handhebels orientiert ist, mit zunehmender Schließbewegung der Handhebel in Richtung einer parallelen Ausrichtung zu dem ersten Handhebel verschwenkt wird. Der erste Handhebel bildet auf seiner Außenseite eine Aufnahme für das Rohr aus Kunststoff, welches mit zunehmender Verschwenkung des Schneidelements auf den ersten Handhebel zu durchtrennt wird.

US 6,427,275 B1 offenbart ein Werkzeug, welches zum Abisolieren, Schneiden und Verpressen von Koaxialkabeln Einsatz finden kann. Gegenüber einem Gehäuse ist ein Handhebel um eine Schwenklager verschwenkbar gelagert. Das Gehäuse sowie der Handhebel besitzen benachbart dem Schwenklager jeweils Schneidmesser, welche durch Verschwenkung des Handhebels gegenüber dem Gehäuse aufeinander zu bewegt werden, um das Koaxialkabel zu durchtrennen. Mit den Schneidmessern ist ein erstes Werkzeug gebildet. In einer quer zur Bewegungsebene des Handhebels orientierten Durchgangsausnehmung des Gehäuses ist eine Aufnahme für ein Koaxialkabel relativ verschieblich zu einem weiteren Schneidelement geführt, welches eine geeignete konkave Schneide für ein Abisolieren des Koaxialkabels besitzt. Über eine Feder wird die Aufnahme relativ zu dem weiteren Schneidelement in eine Ausgangslage beaufschlagt, in welcher ein Koaxialkabel zwischen Schneidelement und Aufnahme eingeführt werden kann. Mit einer Bewegung des Handhebels in Richtung des Gehäuses ändert sich die Relativlage der Aufnahme gegenüber dem weiteren Schneidelement zunächst nicht. Lediglich gegen Ende der Schließbewegung kommt eine Innenseite des Handhebels zur Anlage an einen mit der Aufnahme gekoppelten Stößel. Für eine verhältnismäßig kleine Schließbewegung der Handhebel im Endbereich des gesamten Schließhubs nimmt der Handhebel den Stößel und damit die Aufnahme über einen Weg mit, welcher dem Schließhub zwischen Aufnahme und Schneidelement entspricht. Auf diese Weise ist ein zweites Werkzeug gebildet, welches zum Abisolieren des Koaxialkabels genutzt wird. Stirnseitig kann in eine weitere Aufnahme des Gehäuses ein Fitting eingesetzt werden. Mit dieser Aufnahme ist ein drittes Werkzeug gebildet, mit welchem der Fitting verpresst werden kann. Die Erzeugung der Pressbewegung erfolgt hier über einen von einem Nocken des verschwenkten Handhebels betätigten Stößelmechahismus.

Weiterer Stand der Technik ist aus US 5,894,617 A, US 5,063,770 A und DE 92 08 845 U1 bekannt.

### AUFGABE DER ERFINDUNG

Der Erfindung liegt die Aufgabe zugrunde, bei einfacher Ausgestaltung eine multifunktionale Verwendung einer Zange zu ermöglichen.

### LÖSUNG

Die Aufgabe der Erfindung wird erfindungsgemäß mit den Merkmalen des unabhängigen Patentanspruchs 1 gelöst. Weitere Ausgestaltungen einer erfindungsgemäßen Zange ergeben sich entsprechend den abhängigen Patentansprüchen 2 bis 11.

### BESCHREIBUNG DER ERFINDUNG

Während gemäß den von der Anmelderin vertriebenen Zangen ein zusätzliches Werkzeug zu dem von dem Zangenkopf gebildeten Werkzeug mit zwei Wetkzeugteilen gebildet ist, die jeweils fest an einem Handhebel gehalten sind, schlägt die Erfindung vor, dass zwischen den Handhebeln der Zange ein zweites Werkzeug angeordnet ist, welches (mit beiden Werkzeugteilen) an einem einzigen Handhebel gehalten ist. Während der Schließbewegung der Handhebel wird der nicht das zweite Werkzeug haltende Handhebel mit einer Betätigungsfläche an das zweite Werkzeug unter Erzeugung einer Betätigungskraft angepresst. Möglich ist, dass der Kontakt an der Betätigungsfläche während des gesamten Hubs der Handhebel gegeben ist mit einer unter Umständen über den Hub veränderlichen Betätigungskraft. Ebenfalls möglich ist allerdings auch, dass von einer Öffnungsstellung der Handhebel zunächst eine Art "Leerhub" für das zweite Werkzeug durchgeführt wird, bis die Betätigungsfläche des einen Handhebels an das zweite Werkzeug zur Anlage kommt. Die Betätigungsfläche kann eine Betätigungskraft normal zur Betätigungsfläche auf das zweite Werkzeug ausüben. Durchaus möglich ist aber auch, dass eine gleitende Relativbewegung zwischen Betätigungsfläche und dem zweiten Werkzeug erfolgt. Je nach Konturgestaltung von Betätigungsfläche und/oder zweiten Werkzeug kann sich während des Hubes und der Schließbewegung der Handhebel auch eine Veränderung der Kinematik, insbesondere der Wirklinie der Betätigungskraft und des Hebelarmes der Betätigungskraft auf das zweite Werkzeug, ergeben. Die während der Schließbewegung der Handhebel erzeugte Betätigungskraft dient dann der Betätigung des zweiten Werkzeugs.

Erfindungsgemäß ist es somit lediglich erforderlich, an einem einzigen Handhebel anstelle von zwei Handhebeln Befestigungs- oder Haltevorrichtungen vorzusehen für das zweite Werkzeug, während an dem anderen Handhebel lediglich eine Betätigungsfläche vorzusehen ist. Erfindungsgemäß kann somit der konstruktive Aufbau der Zange vereinfacht werden.

Weiterhin liegt der Erfindung die Erkenntnis zugrunde, dass für die seitens der Anmelderin vertriebenen Zangen gemäß dem Stand der Technik der Hub der Werkzeugteile, hier der Öffnungswinkel der Schneidkanten und Teilnester zueinander, dem Hub und Winkel der Handhebel zueinander entspricht. Anders gesagt entspricht für diese bekannten Ausgestaltungsformen die Schwenkachse der Werkzeugteile der zweiten Werkzeuge der Schwenkachse der Handhebel, so dass die Randbedingungen für die Vorgabe der Kinematik des zweiten Werkzeuges begrenzt sind. Hier ermöglicht die erfindungsgemäße Ausgestaltung mit dem Halten des zweiten Werkzeugs an einem einzigen Handhebel und Einwirken und Betätigen des zweiten Werkzeuges über eine Betätigungsfläche des anderen Handhebels eine Vergrößerung der Gestaltungsmöglichkeiten und Beeinflussungsmöglichkeiten der Kinematik, ohne dass die Kinematik für das von dem Zangenkopf gebildete Werkzeug verändert werden muss.

Gemäß einer Ausgestaltung der Erfindung ist das von dem Zangenkopf gebildete Werkzeug ein Crimpwerkzeug, welches also zum Verpressen eines Werkstückes, beispielsweise eines Steckers für ein elektrisches Kabel, genutzt wird.

Möglich ist, dass bei der erfindungsgemäßen Zange das zwischen den Handhebeln angeordnete zweite Werkzeug ein Abisolierwerkzeug ist. Von Vorteil ist hierbei, wenn gleichzeitig das von dem Zangenkopf gebildete Werkzeug ein Crimpwerkzeug ist. Demgemäß kann die Zange zunächst in einem ersten Bearbeitungsvorgang für das Abisolieren eines Kabelendes mit dem das zweite Werkzeug bildenden Abisolierwerkzeug genutzt werden. Für einen anschließenden weiteren Bearbeitungsvorgang desselben Kabelendes kann dann mit derselben Zange das von dem Zangenkopf gebildete Crimpwerkzeug genutzt werden, um das zuvor abisolierte Kabelende mit einem Stecker zu verpressen.

Während durchaus möglich ist, dass das Abisolierwerkzeug lediglich ein Nest bildet für das Abisolieren eines Kabels mit einem gewünschten Querschnitt, schlägt die Erfindung in weiterer Ausgestaltung vor, dass das Abisolierwerkzeug mehrere Nester besitzt, die für das Abisolieren von Kabeln mit unterschiedlichen Querschnitten, insbesondere Durchmessern und/oder Außenkonturen, eingesetzt werden können.

Möglich ist auch, dass das zwischen den Handhebeln angeordnete zweite Werkzeug ein Schneidwerkzeug ist. Für eine besonders vorteilhafte Ausgestaltung der Erfindung ist das zweite Werkzeug sowohl ein Schneidwerkzeug als auch ein Abisolierwerkzeug, so dass dieses zunächst zum Durchtrennen eines Kabels mit Benutzung des Schneidwerkzeugs, dann zum Abisolieren eines durch Schneiden erzeugten Kabelendes mit Einsatz des Abisolierwerkzeugs genutzt werden kann und schließlich das von dem Zangenkopf gebildete Crimpwerkzeug genutzt werden kann, um einen Stecker mit dem freigelegten Kabelende zu verpressen.

Während durchaus möglich ist, dass das zwischen den Handhebeln angeordnete zweite Werkzeug fest an dem Handhebel gehalten ist, beispielsweise als integraler Bestandteil des Handhebels ausgebildet ist, mit diesem verschraubt, vernietet oder verschweißt ist, schlägt eine weitere Ausgestaltung der Erfindung vor, dass das zwischen den Handhebeln angeordnete zweite Werkzeug lösbar an dem Handhebel gehalten ist. Hier sind vielfältige Ausgestaltungen für das lösbare Halten im Rahmen der vorliegenden Erfindung denkbar. Um lediglich einige Beispiele zu nennen, kann das Werkzeug entsprechend einem Pressprofileinsatz gemäß DE 201 00 031 U1 in eine Führungsschiene eines Handhebels eingeschoben und in dieser rastiert oder verriegelt werden. Ebenfalls möglich ist, dass das zweite Werkzeug lösbar quer zur Längsachse des Handhebels an diesen ansetzbar ist, beispielsweise indem dieses von außen den Handhebel umgreift oder in eine entsprechende Ausnehmung des Handhebels einsetzbar ist. Möglich wäre auch, dass das Werkzeug mit dem Handhebel verschraubt ist.

In weiterer Ausgestaltung der Erfindung ist an dem Handhebel nicht nur das zweite Werkzeug gehalten. Vielmehr wird an dem Handhebel ein weiteres Werkzeug für einen beliebigen weiteren Zweck gehalten. Ebenfalls möglich ist, dass zusätzlich zu dem zweiten Werkzeug ein Einsatz, wie beispielsweise ein Pressprofileinsatz gemäß DE 201 00 031 U1, gehalten ist. Hierdurch kann die Variabilität des Einsatzes des Werkzeuges weiter vergrößert werden. Ebenfalls möglich ist, dass Teile von Werkzeugen oder Werkzeuge an dem oder den Handhebeln gehalten und bevorratet werden.

Weiterhin schlägt die Erfindung vor, dass der Schließhub des mit dem Zangenkopf gebildeten Werkzeugs mit dem Schließhub des zwischen den Handhebeln angeordneten zweiten Werkzeugs korreliert. Dies kann einerseits darin bestehen, dass eine Schließstellung des mit dem Zangenkopf gebildeten Werkzeugs gleichzeitig erreicht wird mit der Schließstellung des zweiten Werkzeugs. Beginnt der Schließhub des zweiten Werkzeugs gleichzeitig mit dem Schließhub des mit dem Zangenkopf gebildeten Werkzeugs, finden die beiden genannten Schließhübe gleichzeitig statt. Allerdings ist je nach Ausbildung der Geometrie, der Lager und der Anordnung der Betätigungsfläche eine unterschiedliche Kinematik während der einzelnen Schließhübe ermöglicht.

Während durchaus möglich ist, dass das zweite Werkzeug von einer einmal erreichten Schließstellung wieder manuell in eine Öffnungsstellung verbracht wird, schlägt die Erfindung vor, dass das zwischen den Handhebeln angeordnete zweite Werkzeug über ein Federelement in eine Öffnungsstellung beaufschlagt ist, so dass mit dem Erreichen einer Schließstellung des zweiten Werkzeuges und Öffnung der Handhebel das zweite Werkzeug automatisiert wieder in seine Öffnungsstellung zurückkehren kann.

Ebenfalls möglich ist, dass das zweite Werkzeug in einem Axialbereich der Handhebel angeordnet ist, wo die Handhebel frei von den Händen des Benutzers sind, so dass keine geometrischen Randbedingungen für das zweite Werkzeug gegeben sind in der Form, dass das zweite Werkzeug so an dem Handhebel gehalten sein muss, dass dieses nicht in Kontakt mit den Händen des Benutzers kommen kann. Gemäß einem weiteren Vorschlag der Erfindung ist allerdings das zweite Werkzeug zwischen den Axialbereichen des Handhebels angeordnet, die von mindestens einer Hand des Benutzers während der Betätigung des von dem Zangenkopf gebildeten Werkzeugs umfasst werden. Dieser Ausgestaltung liegt die Erkenntnis zugrunde, dass sich trotz umfasster Axialbereiche der Handhebel ein Raum zwischen den beiden Axialbereichen der Handhebel ergibt, in denen das zweite Werkzeug angeordnet sein kann, ohne dass dieses überhaupt in Kontakt mit der Hand des Benutzers kommt oder die Handbetätigung stört. Hierbei ist die Erstreckung des zweiten Werkzeugs quer zu der Ebene, in welcher die Handhebel verschwenkt werden, vorzugsweise maximal so groß oder kleiner als die Erstreckung der Handhebel in diese Richtung.

In weiterer Ausgestaltung der Erfindung ist das zweite Werkzeug in einer Stellung, insbesondere der Schließstellung, verriegelbar. Hierdurch kann vermeiden werden, dass das zweite Werkzeug unerwünschte Bewegungen in Öffnungs- und/oder Schließrichtung ausführt, die beispielsweise bei der Benutzung des von dem Zangenkopf ausgebildeten Werkzeugs stören könnten.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine erfindungsgemäße Zange mit einem von einem Zangenkopf gebildeten Werkzeug in Form eines Crimpwerkzeuges und einem zwischen den Handhebeln angeordneten zweiten Werkzeug, welches hier als Abisolierwerkzeug ausgebildet ist, in einer Seitenansicht.
- **Fig. 2**: zeigt eine Zange gemäß Fig. 1, bei welcher eine Deckplatte beseitigt ist.
- **Fig. 3**: zeigt eine räumliche Darstellung eines als Abisolierwerkzeug ausgebildeten zweiten Werkzeugs, welches Teil der Zange gemäß Fig. 1 und 2 ist, in einer Schließstellung.
- **Fig. 4**: zeigt das Abisolierwerkzeug gemäß Fig. 3 in einer Seitenansicht und einer Öffnungsstellung.
- **Fig. 5**: zeigt das Abisolierwerkzeug gemäß Fig. 3 und 4 mit einer beseitigten Deckplatte in einer Öffnungsstellung.
- **Fig. 6**: zeigt eine Deckplatte eines Abisolierwerkzeugs gemäß Fig. 3 bis 5 in einer Seitenansicht.
- **Fig. 7**: zeigt eine Werkzeughälfte eines Abisolierwerkzeugs gemäß Fig. 3 bis 5 in einer Seitenansicht.
- **Fig. 8**: zeigt die andere Werkzeughälfte eines Abisolierwerkzeugs gemäß Fig. 3 bis 5 in einer Seitenansicht.

### FIGURENBESCHREIBUNG

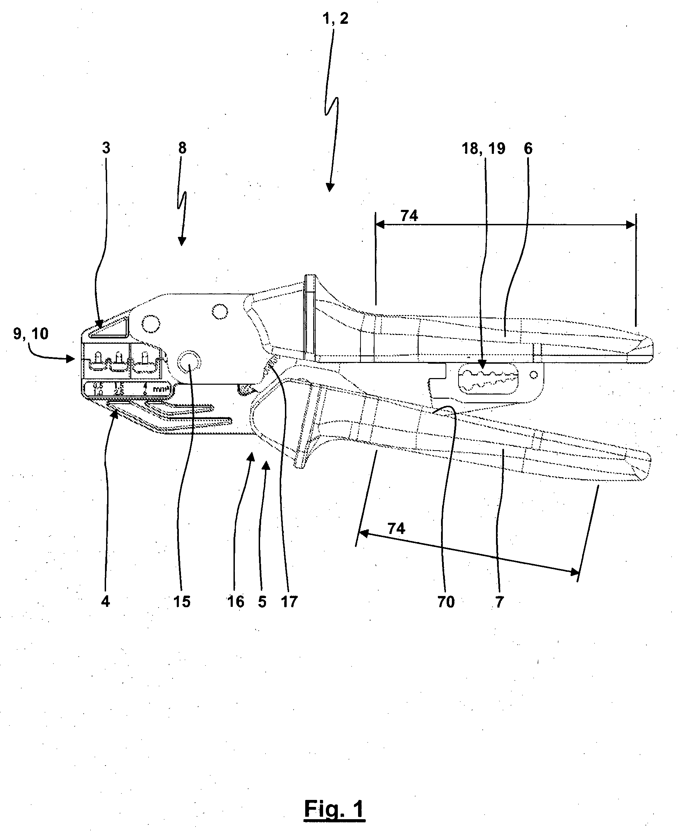

**Fig. 1** zeigt eine erfindungsgemäße Zange 1, die hier als Press- oder Crimpzange 2 ausgebildet ist. Die Zange besitzt Backen 3, 4, die über einen Übertragungsmechanismus 5 derart mit Handhebeln 6, 7 gekoppelt sind, dass eine Öffnung- und Schließbewegung der Handhebel 6, 7 mit manuell von einem Benutzer aufgebrachten Öffnungs- und/oder Schließkräften eine Öffnungs- oder Schließbewegung der Backen 3, 4 mit hiermit verbundenen Backenkräften, hier Klemmkräften, zur Folge hat. Mit den Backen 3, 4 ist ein von einem Zangenkopf 8 ausgebildetes Werkzeug 9 gebildet. Für das dargestellte Ausführungsbeispiel ist das Werkzeug 9 ein Press- oder Crimpwerkzeug 10, bei welchem die Backen 3, 4 jeweils drei Pressgesenkhälften ausbilden oder Gesenkkörper oder Pressgesenkeinsätze tragen, die drei derartige Pressgesenkhälften ausbilden. Die unterschiedlichen Pressgesenkhälften sind angepasst für das Verpressen von Steckern mit unterschiedlichen Durchmessern und/oder Geometrien.

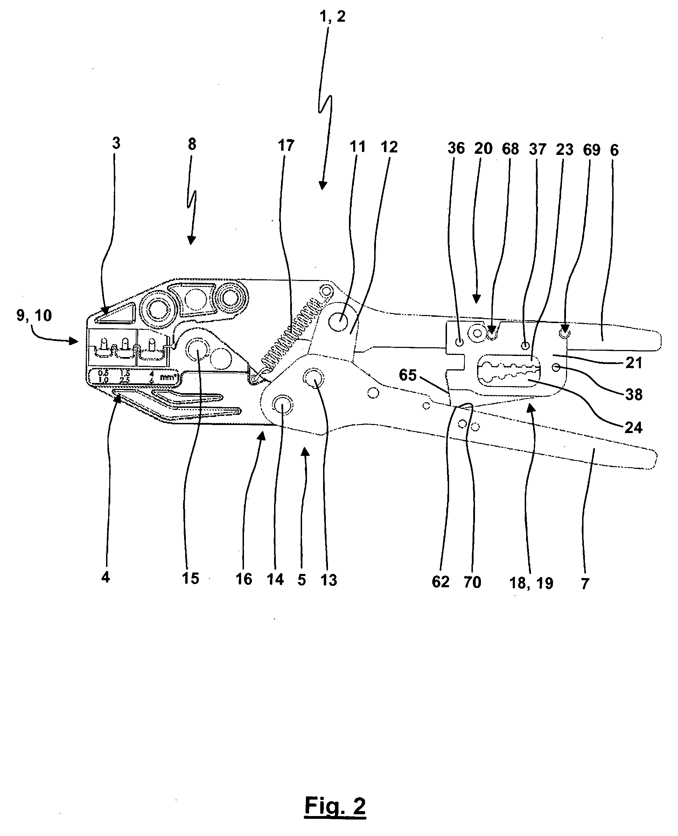

Für das dargestellte Ausführungsbeispiel ist der Übertragungsmechanismus 5 gebildet mit einem Zangenteil, bei welchem der Handhebel 6 einstückig mit der Backe 3 ausgebildet ist. An dem Handhebel 6 ist in einem Gelenk 11 ein Endbereich eines Druckhebels 12 angelenkt, dessen anderer Endbereich nahe dem vorderen Endbereich des Handhebels 7 in einem Gelenk 13 an dem Handhebel 7 angelenkt ist. Wie insbesondere in **Fig. 2** zu erkennen ist, besitzt der Handhebel 7 einen über das Gelenk 11 in Richtung des Zangenkopfes 8 hinausgehenden Endbereich, welcher über ein Gelenk 14 an der Backe 4 angelenkt ist. Die Backe 4 ist darüber hinaus über ein Gelenk 15 verschwenkbar gegenüber dem mit dem Handhebel 6 gebildeten Zangenteil gelagert. Der Handhebel 7 bildet mit dem Druckhebel 12 sowie den Gelenken 11, 13, 14 und 15 sowie der erläuterten Anlenkung an die Pressbacke 4 einen Kniehebeltrieb 16. Über eine zwischen dem Handhebel 7 bzw. dem zugeordneten Zangenteil sowie der Backe 4 wirkende Zugfeder 17 wird die Zange 1 in ihre Öffnungsstellung beaufschlagt.

Es ist zu unterstreichen, dass die vorliegende Erfindung nicht auf den Einsatz in einer Zange wie zuvor beschrieben beschränkt ist. Beispielsweise kann das Werkzeug 9 nicht als Crimpwerkzeug 10, sondern für einen anderen Zweck, insbesondere zum Schneiden, ausgebildet sein. Möglich ist weiterhin, dass der Übertragungsmechanismus 5 nicht mit dem Kniehebeltrieb 16 gebildet ist, sondern beispielsweise
- mit zwei im Wesentlichen einstückigen Zangenteilen entsprechend den eingangs erläuterten, von der Anmelderin vertriebenen Zangen,
- mit einer Kurvenscheibe zur Übertragung der von dem Benutzer auf die Handhebel 6, 7 aufgebrachten Kraft zu den Backen 3, 4 oder
- einem beliebigen anderen an sich bekannten Übertragungsmechanismus.

Eingeschränkt ist die Erfindung auch nicht auf eine Verschwenkung der Backen 3, 4 um ein gemeinsames Gelenk. Vielmehr ist es ebenfalls möglich, dass die Backen translatorisch aufeinander zu und voneinander weg bewegt werden. Möglich ist auch der Einsatz der Erfindung für Zangen, bei welchen eine Schließbewegung der Handhebel 6, 7 verbunden ist mit einer Öffnungsbewegung der Backen 3, 4 (und umgekehrt). Um lediglich einige Beispiele zu nennen, werden Zangen als mögliche Zangen im Rahmen der vorliegenden Erfindung genannt, wie diese in den Druckschriften DE 37 08 727 C2, DE 37 33 358 C1, DE 40 23 337 C1, DE 40 26 332 C2, DE 40 39 435 C1, DE 44 27 553 C2, DE 196 10 899 C1, DE 197 13 580 C2, DE 197 09 639 A1, DE 197 53 436 C2, DE 198 02 287 C1, DE 198 32 884 C1, DE 198 34 859 C2, DE 199 24 086 C2, DE 199 24 087 C2, DE 199 63 097 C1, DE 100 56 900 C1, DE 101 32 413 C2, DE 102 42 345 B3, DE 103 46 241 B3, DE 10 2005 003 615 B3, DE 10 2005 003 617 B3, DE 10 2007 038 626 A1, DE 10 2007 001 235 A1, DE 10 2008 007 303 A1, DE 10 2008 005 472 A1, DE 10 2008 012 011 A1, DE 10 2008 017 366 A1, DE 20 2008 003 703 U1 und DE 10 2009 001 949.9-15 der Anmelderin beschrieben sind.

Erfindungsgemäß ist an dem Handhebel 6 der Zange 1 ein zweites Werkzeug 18, hier ein Abisolierwerkzeug 19, gehalten. Dieses Halten kann über eine beliebige Halteeinrichtung erfolgen, insbesondere eine Rast- oder Verriegelungseinrichtung, eine Verschraubung, ein verrasteter oder verriegelter Stift und ähnliches. Für das dargestellte Ausführungsbeispiel ist das zweite Werkzeug 18 über eine Rastverbindung 20 an dem Handhebel 6 gehalten. Unter einer Rastverbindung wird in diesem Zusammenhang eine Verbindung verstanden, welche unter elastischer Verformung eines Federelements, beispielsweise eines Abstützelements für ein Rastelement wie eine Rastnase, einen Formschluss, insbesondere mit einer Rastnut, herstellt, die wiederum lösbar ist durch elastische Verformung des Federelements. Hingegen wird unter einer ebenfalls im Rahmen der vorliegenden Erfindung einsetzbaren Verriegelungseinrichtung zum Halten des zweiten Werkzeugs 18 an dem Handhebel 6 eine Einrichtung verstanden, bei welcher das zweite Werkzeug 18 formschlüssig an dem Handhebel 6 gehalten ist und ein Formschluss eines Verriegelungselements nur beseitigt werden kann, indem das Verriegelungselement oder mit diesem zusammenwirkende Bauelemente zerstört werden oder aber das Verriegelungselement manuell beseitigt oder außer Eingriff gebracht wird.

Das Abisolierwerkzeug 19 ist in einer Plattenbauweise ausgebildet, wobei zwischen zwei Deckplatten 21, 22, über die das Abisolierwerkzeug 19 an dem Handhebel 6 gehalten ist, zwei in einer gemeinsamen Ebene angeordnete plattenförmige Werkzeugteile 23, 24 angeordnet sind.

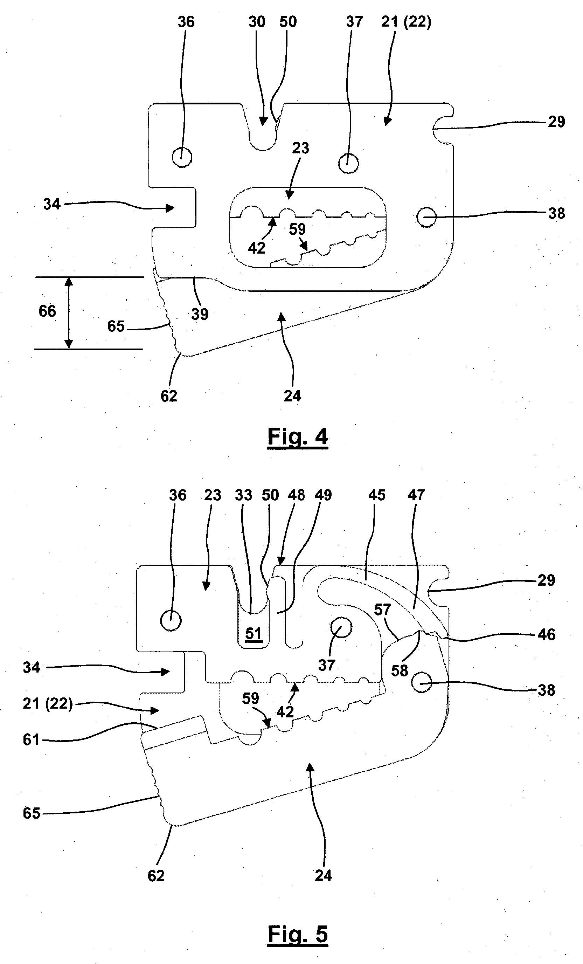

Das Abisolierwerkzeug 19 verfügt über die folgenden funktionellen Bestandteile:
- Zwei Verbindungsbereiche 25, 26, über welche das Abisolierwerkzeug 19 an den Handhebel 6 über geeignete Halte- oder Befestigungselemente des Handhebels 6 lösbar und lagefixiert gehalten ist,
- ein Schneidfenster 27, im Bereich dessen ein Werkstück, insbesondere ein Kabel, von dem Abisolierwerkzeug 19 durchtrennt werden kann und
- ein Abisolierfenster 28, im Bereich dessen Schneidkanten der Werkzeugteile 23, 24 jeweils mehrere Teilnester bilden, welche mit einer Schließbewegung der Werkzeugteile 23, 24 in die Mantelfläche eines Kabels einschneiden und sich zu Nestern ergänzen, mittels welchen das Kabel dann durch Ziehen an dem Kabel quer zur Haupterstreckungsrichtung des Abisolierwerkzeuges 19 (Zeichenebene der Fig. 4 und 5) abisoliert werden kann.

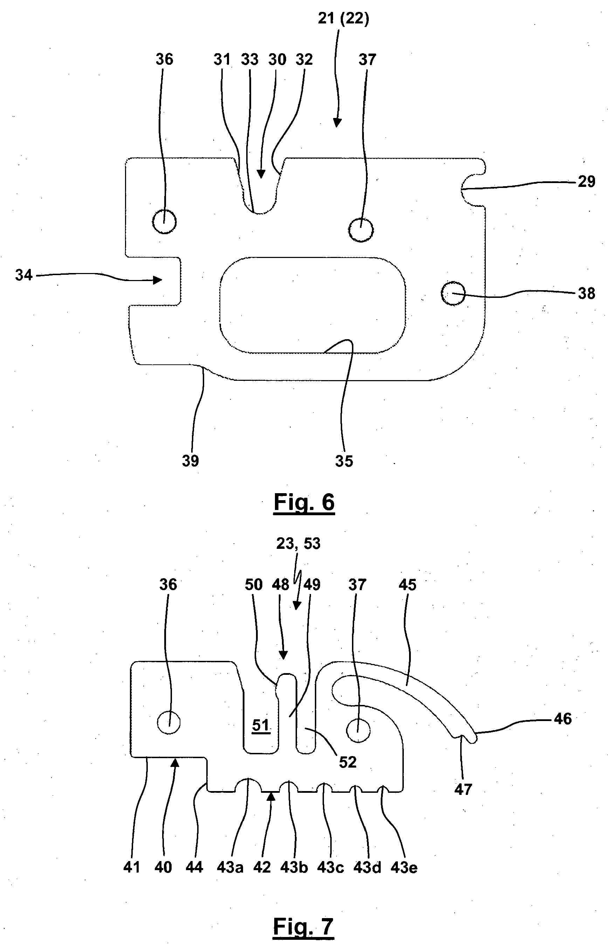

**Fig. 6** zeigt eine Detailansicht einer der beiden identisch ausgebildeten Deckplatten 21, 22. Die Deckplatte 21 besitzt eine in erster Näherung rechteckige Außenkontur. Zur Bildung des Verbindungsbereichs 26 ist in dem in Fig. 6 vertikalen rechten seitlichen Rand eine randoffene, U-förmige oder halbkreisförmige Ausnehmung 29 ausgebildet. Im Bereich des oberen Randes ist zur Bildung des Verbindungsbereichs 25 eine weitere randoffene Ausnehmung 30 vorgesehen, welche mit V-förmig nach außen weisenden Einführschrägen 31, 32 sowie einem U-förmigen oder halbkreisförmigen Grund 33 gebildet ist. Im Bereich des linken Randes besitzt die Deckplatte 21 zur Bildung des Schneidmessers 27 eine U-förmige, randoffene und rechtwinklige Ausnehmung 34. Zur Bildung des Abisolierfensters 28 weist die Deckplatte 21 wie dargestellt eine randgeschlossene Ausnehmung 35 auf, welche rechteckförmig mit abgerundeten Ecken ausgebildet ist und deren längere Seiten in den Fig. 4 und 5 horizontal orientiert sind. Darüber hinaus besitzt die Deckplatte 21 Durchgangsbohrungen 36-38, welche vertikal zur Zeichenebene gemäß Fig. 6 orientiert sind. Die Durchgangsbohrungen 36, 37 sind hierbei in Fig. 6 ungefähr auf einer horizontalen Achse angeordnet mit einem Abstand, der zumindest der Hälfte der Erstreckung der Deckplatte 21 in horizontaler Richtung in Fig. 6 entspricht. Die Durchgangsbohrung 38 ist zwischen der Ausnehmung 35 und dem rechten Rand der Deckplatte 21, ungefähr mittig in Höhenrichtung der Ausnehmung 35 angeordnet. Zumindest die unteren Ecken der Deckplatte 21 sind abgerundet. Darüber hinaus besitzt die Deckplatte 21 im Bereich der unteren linken Ecke, also diagonal gegenüberliegend zur Ausnehmung 29, eine Abschrägung 39 oder Materialbeseitigung gegenüber der grundsätzlichen rechteckigen Außenkontur.

**Fig. 7** zeigt eine Detaildarstellung eines Werkzeugteils 23. Der obere linke Bereich des Werkzeugteils 23 ist korrespondierend zum oberen linken Bereich der Deckplatte 21 ausgebildet mit entsprechender Durchgangsbohrung 36, rechtwinkliger Ecke und einer Ausfräsung 40, welche das Werkzeugteil 23 im unteren linken Eckbereich begrenzt. Hierbei ist ein horizontaler Schenkel 41 der Ausfräsung 40 mit demselben Abstand von der Durchgangsbohrung 36 angeordnet wie der Abstand eines korrespondierenden Schenkels der Ausnehmung 34 der Deckplatte 21 von deren Durchgangsbohrung 36, so dass die genannten Schenkel in montiertem Zustand in einer gemeinsamen Ebene angeordnet sind. Im Bereich des unteren Randes des Werkzeugteils 23 bildet dieses eine in Fig. 7 horizontale Schneidkante aus, wobei der Abstand der Schneidkante 42 von den Durchgangsbohrungen 36, 37 des Werkzeugteils 23 derart gewählt ist, dass in mit der Deckplatte 21 montiertem Zustand die Schneidkante 42 ungefähr mittig zur vertikalen Erstreckung der Ausnehmung 35 in Fig. 6 angeordnet ist. In der Schneidkante 42 sind Teilnester 43a-e vorgesehen mit ungefähr halbkreisförmiger Schneidkontur. Der Schenkel 41 geht über eine rechtwinklige Stufe 44 in die Schneidkante 42 über. Von einem Grundkörper des Werkzeugteils 23 erstreckt sich ein Federarm 45, welcher in einem Finger 46 mit zugeordneter Rastnut 47 endet. Für das dargstellte Ausführungsbeispiel ist der Federarm kurvenförmig oder teilkreisförmig ausgebildet und erstreckt sich von einem oberen Rand des Werkzeugteils 23, ungefähr oberhalb der Durchgangsbohrung 37 in montiertem Zustand fast bis zum rechten Rand des Abisolierwerkzeugs in einer Höhe, die ungefähr der Höhe der Verbindungsachse der Durchgangsbohrungen 36, 37 entspricht. Die Elastizität des Federarms 45 ist vorgegeben durch die Materialsteifigkeit des für das Teilwerkzeug 23 verwendeten Blechs oder der hierzu eingesetzten Platte, die Länge des Federarms 45 und die Querschnittsgeometrie des Federarms 45. Ungefähr mittig zur Horizontalerstreckung des Werkzeugteils 23 ist ein Rastelement 48 gebildet. Das Rastelement verfügt über einen Federarm 49, der in Fig. 7 vertikal orientiert ist, sowie eine im oberen Endbereich des Federarms 49 gebildete Rastnase 50, die in horizontaler Richtung gegenüber dem Federarm 49 in Fig. 7 nach links hervorsteht. Zur Bildung des Rastelementes 48 sind in das Werkzeugteil 23 von dem oberen Rand parallele, randoffene Ausnehmungen 51, 52 eingebracht. In montiertem Zustand sind die Ausnehmung 51 und das Rastelement 48 derart positioniert, orientiert und dimensioniert, dass das Werkzeugteil 23 die Ausnehmung 30 der Deckplatte 21 grundsätzlich nicht abdeckt, aber die Rastnase 50 oberhalb des Grundes 33 der Ausnehmung 30 in diese eintritt, so dass die Rastnase 50 die Ausnehmung 30 von dem Grund 33 in vertikaler Richtung nach oben verjüngt. Unter elastischer Verformung des Federarms 49 kann die Rastnase 50 in Fig. 7 elastisch nach rechts gedrückt werden, womit in montiertem Zustand die Ausnehmung 30 nach oben freigegeben wird bzw. die genannte Verjüngung der Ausnehmung 30 beseitigt wird. Mit der Schneidkante 42 ist das Werkzeugteil 23 als Schneidmesser 53 ausgebildet.

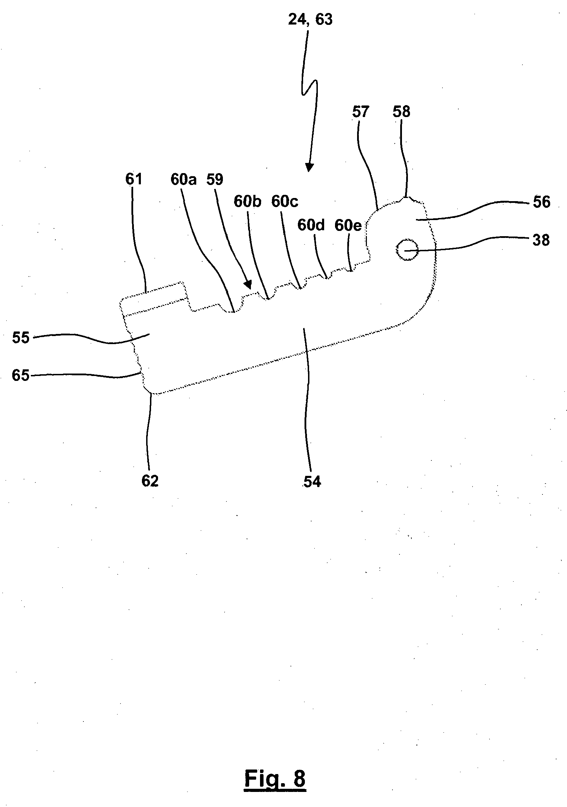

**Fig. 8** zeigt das andere Werkzeugteil 24, welches in erster Näherung sichelförmig oder U-förmig ausgebildet ist mit einem Grundschenkel 54 sowie zwei vertikal orientierten, verkürzten Seitenschenkeln 55, 56. Im Übergangsbereich von dem Grundschenkel 54 zu dem in Fig. 8 rechten Seitenschenkel 56 ist in dem Werkzeugteil 24 die Durchgangsbohrung 38 vorgesehen. Der obere Endbereich des Seitenschenkels 56 ist mit einer kurvenförmigen oder halbkreisförmigen Gleitkontur 57 versehen, entlang welcher in montiertem Zustand mit einer Verschwenkung des Werkzeugteils 24 der Finger 46 des Werkzeugteils 23 gleiten kann. In der Gleitkontur 57 ist eine Rastnase 58 vorgesehen, die in montiertem Zustand für eine ausgewählte Winkelstellung des Werkzeugteils 24 gegenüber dem Werkzeugteil 23 in die Rastnut 47 einrasten kann. Bei der ausgewählten Winkelstellung handelt es sich vorzugsweise um die Schließstellung. Im Bereich des Grundschenkels 54 bildet das Werkzeugteil 24 auf der Oberseite eine Schneidkante 59, in welcher Teilnester 60a-e mit ungefähr halbkreisförmiger Kontur gebildet sind. In geschlossenem Zustand der Werkzeugteile 23, 24 ergänzen sich die Teilnester 43 und 60 zu mehreren Nestern 71a-e mit unterschiedlichen Durchmessern. Der obere Endbereich des Seitenschenkels 55 des Werkzeugteils 24 bildet eine geradlinige, parallel zum Grundschenkel 54 orientierte Schneidkante 61. Der äußere Rand des Seitenschenkels 55 ist mit einer Betätigungsfläche 65 oder Riffelung versehen. Das Werkzeugteil 24 bildet infolge der Schneidkante 61 sowie der Schneidkante 59 ein (doppeltes oder multifunktionales) Schneidmesser 63.

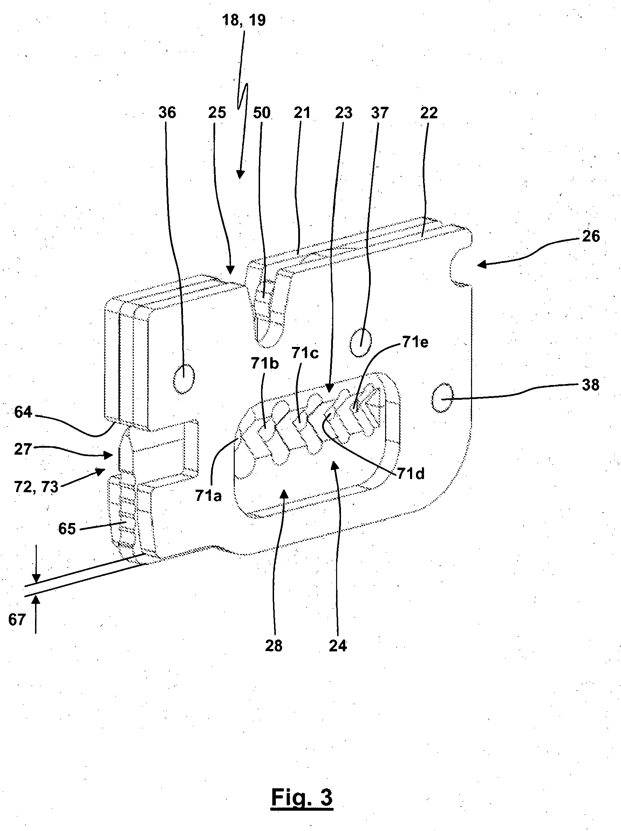

In montiertem Zustand ist das Werkzeugteil 23 zwischen den Deckplatten 21, 22 gehalten durch Passstifte, Niete oder ähnliches, die sich durch die Durchgangsbohrungen 36, 37 erstrecken. Wie insbesondere in **Fig. 3** **und** **5** zu erkennen ist, deckt die Rastnase 50 teilweise die Ausnehmung 30 nach oben ab. Weiterhin bilden die Ausnehmungen 34 der Deckplatten 21, 22 und der Schenkel 41 eine ebene, durchgehende Gegenfläche 64. Ein Lagerbolzen erstreckt sich durch die Durchgangsbohrung 38 des Werkzeugteils 24 sowie der Deckplatten 21,22 derart, dass das Werkzeugteil 24 gegenüber den Deckplatten 21, 22 sowie dem Werkzeugteil 23 um diesen Lagerbolzen verschwenkbar gelagert ist. Fig. 3 zeigt hierbei das Werkzeugteil 24 verschwenkt in eine Schließstellung, während die **Fig. 4** und 5 eine Öffnungsstellung des Werkzeugteils 24 zeigen.

In der Öffnungsstellung verfügen die Schneidkanten 42, 59 und die Teilnester 43, 60 über einen mit zunehmendem Abstand von dem Lagerbolzen zunehmenden Abstand. Die Schneidkante 61 ist ebenfalls entfernt von der Gegenfläche 64 angeordnet. Die untere linke (abgerundete) Ecke des Werkzeugteils 24, welche eine Betätigungsfläche 62 ausbildet, tritt um einen Abstand 66 aus den Deckplatten 21, 22 heraus. Mit einer Verschwenkung des Werkzeugteils 24 in die Schließstellung nähern sich sowohl die Schneidkanten 42, 59 als auch die Schneidkante 61 und die Gegenfläche 64 aneinander an, bis diese mit Erreichen der Schließstellung aneinander zur Anlage kommen. Hierbei bildet die Schneidkante 61 einen Linienkontakt mit der Gegenfläche 64 aus. Während der genannten Schließbewegung gleitet der Finger 64 entlang der Gleitkontur 59, wobei die Rastnase 58 der Gleitkontur 57 in der Schließstellung in der Rastnut 47 einrastet. Infolge der Abschrägung 39 steht auch in der Schließstellung die Betätigungsfläche 62 noch um einen Abstand 67 aus den Deckplatten 21, 22 hervor, wobei dieser Abstand 67 kleiner ist als der Abstand 66 in der Öffnungsstellung.

Eine lösbare Montage des Abisolierwerkzeugs 19 an dem Handhebel 6 ist wie folgt möglich: Der Handhebel 6 besitzt zwei quer zur Zeichenebene gemäß Fig. 2 orientierte Haltebolzen 68, 69, die beispielsweise zwischen zwei Deckplatten des Handhebels 6 angeordnet sind. Für die Herstellung der Halte- oder Rastverbindung zwischen Abisolierwerkzeug 19 und Handhebel 6 wird das Abisolierwerkzeug 19 gegenüber der horizontalen Ausrichtung in den Figuren gegen den Uhrzeigersinn leicht verdreht und von dem Zangenkopf 8 weg schräg von unten an den Handhebel 6 derart angenähert, dass der Verbindungsbereich 6 in Eingriff kommt mit dem Haltebolzen 69, indem der Haltebolzen 69 zur Anlage kommt an die Ausnehmungen 29 der Deckplatten 21, 22. Dann wird das Abisolierwerkzeug 19 um den Haltebolzen 69 in Richtung des Handhebels 6 verschwenkt, wobei die Ausnehmung 29 der Deckplatten 21, 22 entlang der Mantelfläche des Haltebolzens 69 gleitet. Der Haltebolzen 68 tritt mit dieser Schwenkbewegung in die Ausnehmung 60 ein, wobei eine ergänzende Führung durch die Einführschrägen 31, 32 erfolgen kann. Mit weiterem Verschwenken und Eintritt des Haltebolzens 68 in die Ausnehmung 30 kommt der Haltebolzen 68 zur Anlage an die Rastnase 50 und drückt die Rastnase 50 zur Seite unter elastischer Beaufschlagung des Federarms 49. In der Endstellung, die erreicht ist, wenn der obere Rand des Abisolierwerkzeugs 19 fluchtend zur Längsachse des Handhebels 6 angeordnet ist, kommt der Haltebolzen 68 zu Anlage an den Grund 33, und die Rastnase 50 "schnappt" hinter den Haltebolzen 68, so dass ein Wiederaustritt des Haltebolzens 68 aus der Ausnehmung 30 nur möglich ist, wenn Entnahmekräfte aufgebracht werden, die ausreichend sind, um eine Verformung der Rastnase 50 herbeizuführen.

Eine Betätigung und/oder Öffnung des Abisolierwerkzeugs 19 kann dadurch erfolgen, dass für geöffnete Handhebel 6, 7 der Zange 1 der Benutzer manuell auf die Betätigungsfläche 62, 65 einwirkt, indem beispielsweise mit einem Daumen der Benutzer manuell das Werkzeugteil 24 verschwenkt.

Ebenfalls möglich ist, dass der Handhebel 7 mit einer innen liegenden Betätigungsfläche 70 zur Anlage an die Betätigungsfläche 62 des Werkzeugteils 24 kommt, so dass mit einer Schließbewegung der Handhebel 6, 7 die Schließbewegung der Werkzeugteile 23, 24 bewirkt werden kann.

Mit der Schneide 61 und der Gegenfläche 64 ist ein drittes Werkzeug 72, nämlich ein Schneidwerkzeug 73 gebildet, welches gleichzeitig mit dem zweiten Werkzeug 18 betätigt wird.

Die Handhebel 6, 7 werden von dem Benutzer in Axialbereichen 74 mit der Hand umfasst, wobei das zweite Werkzeug 18 zwischen diesen beiden Axialbereichen 74 angeordnet ist. Hierbei ist das Werkzeug 18 so flach ausgebildet, dass dieses in Fig. 1 nicht über die die Handhebel 6, 7 in eine Richtung hervorsteht, die quer zur Zeichenebene orientiert ist.

**BEZUGSZEICHENLISTE**

| | | | |
|---|---|---|---|
| 1 | Zange | 31 | Einführschräge |
| 2 | Crimpzange | 32 | Einführschräge |
| 3 | Backen | 33 | Grund |
| 4 | Backen | 34 | Ausnehmung |
| 5 | Übertragungsmechanismus | 35 | Ausnehmung |
| 6 | Handhebel | 36 | Durchgangsbohrung |
| 7 | Handhebel | 37 | Durchgangsbohrung |
| 8 | Zangenkopf | 38 | Durchgangsbohrung |
| 9 | Werkzeug | 39 | Abschrägung |
| 10 | Crimpwerkzeug | 40 | Ausfräsung |
| 11 | Gelenk | 41 | Schenkel |
| 12 | Druckhebel | 42 | Schneidkante |
| 13 | Gelenk | 43 | Teilnest |
| 14 | Gelenk | 44 | Stufe |
| 15 | Gelenk | 45 | Federarm |
| 16 | Kniehebeltrieb | 46 | Finger |
| 17 | Zugfeder | 47 | Rastnut |
| 18 | zweites Werkzeug | 48 | Rastelement |
| 19 | Abisolierwerkzeug | 49 | Federarm |
| 20 | Rastverbindung | 50 | Rastnase |
| 21 | Deckplatte | 51 | Ausnehmung |
| 22 | Deckplatte | 52 | Ausnehmung |
| 23 | Werkzeugteil | 53 | Schneidmesser |
| 24 | Werkzeugteil | 54 | Grundschenkel |
| 25 | Verbindungsbereich | 55 | Seitenschenkel |
| 26 | Verbindungsbereich | 56 | Seitenschenkel |
| 27 | Schneidfenster | 57 | Gleitkontur |
| 28 | Abisolierfenster | 58 | Rastnase |
| 29 | Ausnehmung | 59 | Schneidkante |
| 30 | Ausnehmung | 60 | Teilnest |
| 61 | Schneidkante | | |
| 62 | Betätigungsfläche | | |
| 63 | Schneidmesser | | |
| 64 | Gegenfläche | | |
| 65 | Betätigungsfläche | | |
| 66 | Abstand | | |
| 67 | Abstand | | |
| 68 | Haltebolzen | | |
| 69 | Haltebolzen | | |
| 70 | Betätigungsfläche | | |
| 71 | Nest | | |
| 72 | drittes Werkzeug | | |
| 73 | Schneidwerkzeug | | |
| 74 | Axialbereich | | |

## Patentansprüche

1. Zange (1) mit einem über Handhebel (6, 7) manuell betätigbaren, von einem Zangenkopf (8) gebildeten Werkzeug (9) zur Bearbeitung eines Werkstücks, wobei
a) zwischen den Handhebeln (6, 7) ein zweites Werkzeug (18) angeordnet ist, welches an einem einzigen Handhebel (6) gehalten ist,
b) während der Schließbewegung der Handhebel (6, 7) der andere Handhebel (7) mit einer Betätigungsfläche (70) an das zweite Werkzeug (18) unter Erzeugung einer Betätigungskraft angepresst wird, wobei
c) die während der Schließbewegung der Handhebel (6, 7) erzeugte Betätigungskraft das zweite Werkzeug (18) betätigt.

2. Zange (1) nach Anspruch 1, **dadurch gekennzeichnet, dass** das von dem Zangenkopf (8) gebildete Werkzeug (1) ein Crimpwerkzeug (2) ist.

3. Zange (1) nach Anspruch 1 oder 2, **dadurch gekennzeichnet, dass** das zwischen den Handhebeln (6, 7) angeordnete zweite Werkzeug (18) ein Abisolierwerkzeug (19) ist.

4. Zange (1) nach Anspruch 3, **dadurch gekennzeichnet, dass** das Abisolierwerkzeug (19) mehrere Nester (71) für das Abisolieren von Kabeln mit unterschiedlichen Querschnitten besitzt.

5. Zange (1) nach einem der vorhergehenden Ansprüche, **dadurch gekennzeichnet, dass** das zwischen den Handhebeln (6, 7) angeordnete zweite Werkzeug ein Schneidwerkzeug (73) ist.

6. Zange (1) nach einem der vorhergehenden Ansprüche, **dadurch gekennzeichnet, dass** das zwischen den Handhebeln (6, 7) angeordnete zweite Werkzeug (18) lösbar an dem Handhebel (6) gehalten ist.

7. Zange (1) nach einem der vorhergehenden Ansprüche, **dadurch gekennzeichnet, dass** lösbar oder fest
a) ein weiteres Werkzeug und/oder
b) ein Einsatz für das von dem Zangenkopf (8) gebildete Werkzeug
von mindestens einem Handhebel (6, 7) gehalten ist.

8. Zange (1) nach einem der vorhergehenden Ansprüche, **dadurch gekennzeichnet, dass** der Schließhub des mit dem Zangenkopf (8) gebildeten Werkzeugs (9) mit dem Schließhub des zwischen den Handhebeln (6, 7) angeordneten zweiten Werkzeugs (18) korreliert.

9. Zange (1) nach einem der vorhergehenden Ansprüche, **dadurch gekennzeichnet, dass** das zwischen den Handhebeln (6, 7) angeordnete zweite Werkzeug (18) über ein Federelement in eine Öffnungsstellung beaufschlagt ist.

10. Zange (1) nach einem der vorhergehenden Ansprüche, **dadurch gekennzeichnet, dass** das zweite Werkzeug (18) zwischen den Axialbereichen (74) der Handhebel (6, 7), die während der Betätigung des von dem Zangenkopf (8) gebildeten Werkzeugs (9) von mindestens einer Hand des Benutzers umfasst werden, angeordnet ist.

11. Zange (1) nach einem der vorhergehenden Ansprüche, **dadurch.gekennzeichnet, dass** das zweite Werkzeug (18) in einer Stellung, insbesondere der Schließstellung, rastierbar oder verriegelbar ist.

## Claims

1. Pliers (1) with a tool (9) for processing a work piece, said tool (9) being formed by a pliers head (8) and being manually actuatable by hand levers (6, 7), wherein
a) a second tool (18) is located between the hand levers (6, 7), said second tool (18) being held by only one of the hand levers (6),
b) during the closing movement of the hand levers (6, 7) the other hand lever (7) is pressed with an actuation surface (70) against the second tool (18) for producing an actuation force and
c) the actuation force produced during the closing movement of the hand levers (6, 7) actuates the second tool (18).

2. Pliers (1) of claim 1, **characterised in that** the tool (1) which is formed by the pliers head (8) is a crimping tool (2).

3. Pliers (1) of claim 1 or 2, **characterised in that** the second tool (18) which is located between the hand levers (6, 7) is a stripping tool (19).

4. Pliers (1) of claim 3, **characterised in that** the stripping tool (19) comprises a plurality of nests (71) for stripping cables having different cross sections.

5. Pliers (1) of one of the preceding claims, **characterised in that** the second tool which is located between the hand levers (6, 7) is a cutting tool (73).

6. Pliers (1) of one of the preceding claims, **characterised in that** the second tool (18) which is located between the hand levers (6, 7) is detachably held by the hand lever (6).

7. Pliers (1) of one of the preceding claims, **characterised in that**
a) another tool and/or
b) an insert for the tool which is formed by the pliers head (8)
is detachably or fixedly held by at least one of the hand levers (6, 7).

8. Pliers (1) of one of the preceding claims, **characterised in that** the closing stroke of the tool (9) which is formed by the pliers head (8) correlates to the closing stroke of the second tool (18) which is located between the hand levers (6, 7).

9. Pliers (1) of one of the preceding claims, **characterised in that** the second tool (18) which is located between the hand levers (6, 7) is biased by a spring element into an open position.

10. Pliers (1) of one of the preceding claims, **characterised in that** the second tool (18) is located between the axial regions (74) of the hand levers (6, 7) which are gripped by at least one hand of the user during the actuation of the tool (9) which is formed by the pliers head (8).

11. Pliers (1) of one of the preceding claims, **characterised in that** it is possible to latch or lock the second tool (18) in one position, in particular the closed position.

## Revendications

1. Pince (1) avec un outil (9) pour l'usinage d'une pièce pouvant être actionné manuellement par le biais de leviers manuels (6, 7) et formé d'une tête de pince (8),
a) un deuxième outil (18), qui est retenu sur un unique levier manuel (6), étant disposé entre les leviers manuels (6, 7),
b) l'autre levier manuel (7) étant, pendant le mouvement de fermeture des leviers manuels (6, 7), pressé avec une face d'actionnement (70) sur le deuxième outil (18) avec production d'une force d'actionnement,
c) la force d'actionnement produite pendant le mouvement de fermeture des leviers manuels (6, 7) actionnant le deuxième outil (18).

2. Pince (1) selon la revendication 1, **caractérisée en ce que** l'outil (1) formé par la tête de pince (8) est un outil de sertissage (2).

3. Pince (1) selon la revendication 1 ou 2, **caractérisée en ce que** le deuxième outil (18) disposé entre les leviers manuels (6, 7) est un outil à dénuder (19).

4. Pince (1) selon la revendication 3, **caractérisée en ce que** l'outil à dénuder (19) possède plusieurs cavités (71) pour dénuder des câbles ayant des sections transversales différentes.

5. Pince (1) selon l'une des revendications précédentes, **caractérisée en ce que** le deuxième outil disposé entre les leviers manuels (6, 7) est un outil de coupe (73).

6. Pince (1) selon l'une des revendications précédentes, **caractérisée en ce que** le deuxième outil (18) disposé entre les leviers manuels (6, 7) est retenu de façon détachable sur le levier manuel (6).

7. Pince (1) selon l'une des revendications précédentes, **caractérisée en ce que**
a) un autre outil et/ou
b) un insert pour l'outil formé par la tête de pince (8) est retenu, de façon détachable ou fixe, par au moins un levier manuel (6, 7).

8. Pince (1) selon l'une des revendications précédentes, **caractérisée en ce que** la course de fermeture de l'outil (9) formé avec la tête de pince (8) est en corrélation avec la course de fermeture du deuxième outil (18) disposé entre les leviers manuels (6, 7).

9. Pince (1) selon l'une des revendications précédentes, **caractérisée en ce que** le deuxième outil (18) disposé entre les leviers manuels (6, 7) est amené dans une position d'ouverture par le biais d'un élément de ressort.

10. Pince (1) selon l'une des revendications précédentes, **caractérisée en ce que** le deuxième outil (18) est disposé entre les zones axiales (74) des leviers manuels (6, 7) qui sont saisies par au moins une main de l'utilisateur pendant l'actionnement de l'outil (9) formé par la tête de pince (8).

11. Pince (1) selon l'une des revendications précédentes, **caractérisée en ce que** le deuxième outil (18) peut être encliqueté ou verrouillé dans une position, en particulier la position de fermeture.
